# EUROPÄISCHE PATENTSCHRIFT

(11) **EP 3 502 378 B1**
(45) Veröffentlichungstag und Bekanntmachung des Hinweises auf die Patenterteilung: **12.04.2023**
(21) Anmeldenummer: 18208592.8
(22) Anmeldetag: 27.11.2018
(51) Int. Cl.: E04H 12/16, F03D 13/20

(54) **TURMSEGMENT FÜR EINE WINDENERGIEANLAGE UND VERFAHREN ZUM HERSTELLEN EINES TURMSEGMENTS**
TOWER SEGMENT FOR A WIND TURBINE AND METHOD FOR PRODUCING A TOWER SEGMENT
SEGMENT DE TOUR POUR UNE ÉOLIENNE ET PROCÉDÉ DE FABRICATION D'UN SEGMENT DE TOUR

(30) Priorität: 29.11.2017 DE 102017011046
(43) Veröffentlichungstag der Anmeldung: 26.06.2019
(73) Patentinhaber: Siemens Gamesa Renewable Energy Service GmbH, 20097 Hamburg (DE)
(72) Erfinder: Frost, Bernd, 25551 Winseldorf (DE)
(74) Vertreter: Glawe, Delfs, Moll

(56) Entgegenhaltungen:
- WO-A1-2008/031912
- WO-A1-2017/040019
- CN-U- 203 452 440
- CN-U- 205 638 802
- DE-A1-102015 118 163

## Beschreibung

Die Erfindung betrifft ein Turmsegment für einen Turm einer Windenergieanlage sowie ein Verfahren zum Herstellen eines Turmsegments.

Ein Turm einer Windenergieanlage kann errichtet werden, indem mehrere kreisringförmige oder polygonale Segmente übereinander angeordnet werden. Die Turmsegmente können als Vollring-Segmente oder als Teilring-Segmente in einem Werk hergestellt werden. Nach dem Transport zum Ort der Errichtung der Windenergieanlage kann der Turm aus den vorgefertigten Turmsegmenten zusammengesetzt werden.

Bei übereinander angeordneten Turmsegmenten liegt eine untere Abschlussfläche des oberen Turmsegments auf der oberen Abschlussfläche des darunter angeordneten Turmsegments auf. Die Turmsegmente können in vertikaler Richtung gegeneinander gespannt werden, um zu verhindern, dass die Turmsegmente relativ zueinander verrutschen. Es ist dann im Wesentlichen die durch die vertikale Spannung verstärkte Reibung zwischen den Turmsegmenten, durch die die Turmsegmente in Position zueinander gehalten werden.

Damit sich eine hinreichende Kraftübertragung zwischen den übereinander angeordneten Turmsegmenten ergibt, müssen die Abschlussflächen der Turmsegmente gut zueinander passen. Bestehen die Abschlussflächen aus Beton, so ist eine sorgfältige Endbearbeitung der Abschlussflächen erforderlich. Das beim Gießen des Betons erreichbare Toleranzmaß reicht nicht aus. Auch bei gut vorbereiteten Abschlussflächen können sich Probleme aus der Sprödigkeit des Betonmaterials ergeben. Bereits kleine Ungenauigkeiten oder Fremdkörper zwischen den Flächen können ausreichen, um Betonstücke aus einer Abschlussfläche herauszubrechen. Es besteht das Risiko, dass der Turm nicht die gewünschte Stabilität hat.

Alternative Verfahren wie das Aufbringen zusätzlicher Ausgleichsschichten (WO 2011/045319 A1) gegebenenfalls mit einem nachfolgenden weiteren Bearbeitungsschritt (WO 2009/121581 A2) sind aufwändig. Weitere Möglichkeiten für die Errichtung eines Turms einer Windenergieanlage sind in EP 0 960 986 A2, WO 2010/044380 A1, WO 2011/157476 A2 beschrieben. Dokument CN 205 638 802 U stellt eine Turmstruktur aus Beton vor, wobei eine Mehrzahl von Ringsegmenten durch Flanschschrauben verbunden ist und wobei die Turmstruktur durch Vorspannstäbe in dem Betonkörper vorgespannt ist. Dokument DE 10 2015 118163 A1 stellt ein Rohrturmbauwerk vor, wobei das Rohrturmbauwerk als Doppelhüllenturm ausgebildet ist. Dokument CN 203 452 440 U stellt ein vorgespanntes Betonstabsegment vor, wobei die beiden Enden über Innenflansche verbunden sind. Dokument WO 2008/031912 A1 stellt einen Turm für eine Windenergieanlage vor, wobei der Turm in Segmente unterteilt ist und wobei die Segmente aus einer Mehrzahl von vorgefertigten Betonteilen bestehen.

Der Erfindung liegt die Aufgabe zugrunde, ein Turmsegment für einen Turm einer Windenergieanlage sowie ein zugehöriges Herstellungsverfahren vorzustellen, mit denen die Wahrscheinlichkeit eines Fehlers beim Errichten des Turms vermindert wird. Ausgehend vom genannten Stand der Technik wird die Aufgabe gelöst mit den Merkmalen der unabhängigen Ansprüche 1 und 12. Vorteilhafte Ausführungsformen sind in den Unteransprüchen angegeben.

Das erfindungsgemäße Turmsegment hat eine Wand aus Beton. Ein mit dem Beton verbundenes erstes Ringteil aus Metall bildet eine obere Abschlussfläche der Wand. Ein mit dem Beton verbundenes zweites Ringteil aus Metall bildet eine untere Abschlussfläche der Wand.

Der Begriff Ring bzw. Ringteil im Sinne der Erfindung umfasst Teile, die eine Kontur in Form eines Kreises oder eines Teilkreises aufspannen. Ebenfalls umfasst sind kreisähnliche Konturen beispielsweise in Form eines Polygons.

Wenn ein Ringteil aus Metall die Abschlussfläche bildet, auf der ein benachbartes Turmsegment aufliegt, ist das Risiko von Fehlern im Vergleich mit einer Abschlussfläche aus Beton deutlich vermindert.

Wenn das Ringteil aus Metall lokal einem erhöhten Druck ausgesetzt ist, kann das Metallmaterial fließen und dem erhöhten Druck auf diese Weise ausweichen. Es kommt weder zu einer lokalen Fehlerstelle in dem Ringteil, noch wird die Reibung in anderen Bereichen des Ringteils beeinträchtigt.

Das Turmsegment ist als Teilring-Segment ausgebildet. Vollring-Segmente können beim Errichten des Turms direkt übereinander angeordnet werden. Im Falle von Teilring-Segmenten wird zunächst aus mehreren in Umfangsrichtung nebeneinander angeordneten Segmenten ein Vollring gebildet, bevor weitere Turmsegmente von oben aufgesetzt werden. Das Teilring-Segment kann sich beispielsweise über einen Umfangsabschnitt von 90°, 120° oder 180° erstrecken, sodass aus vier bzw. drei bzw. zwei Teilsegmenten ein Vollring zusammengesetzt werden kann.

Die untere Abschlussfläche des Turmsegments kann bezogen auf eine zentrale Achse des Turms einen größeren Radius haben als die obere Abschlussfläche des Turmsegments. Die Wand des Turmsegments kann sich von der oberen Abschlussfläche zur unteren Abschlussfläche hin konusförmig aufweiten.

Das Ringteil aus Metall erstreckt sich über den gesamten Umfangsabschnitt, den das Turmsegment aufgespannt. Wenn ein Vollring aus mehreren Teilringen zusammengesetzt wird, kann das Ringteil eines ersten Teilrings in Umfangsrichtung direkt benachbart sein zu dem Ringteil eines zweiten Teilrings. Das Ringteil aus Metall kann so gestaltet sein, dass ein in vertikaler Richtung angrenzendes benachbartes Turmsegment ausschließlich das Ringteil aus Metall berührt und keinen Kontakt zu dem Betonmaterial hat.

Das Ringteil aus Metall kann eine Abschlussfläche von ebener Form bilden. Insbesondere können das Ringteil und/oder das Turmsegment frei sein von Elementen, die über die Abschlussfläche hinausragen. Wird ein benachbartes Turmsegment, das ebenfalls eine Abschlussfläche von ebener Form hat auf eine solche Abschlussfläche aufgesetzt, so finden der Kontakt und die Lastübertragung ausschließlich über die Abschlussfläche statt.

Bezogen auf die radiale Richtung kann das Ringteil aus Metall sich über wenigstens 50 %, vorzugsweise wenigstens 70 %, weiter vorzugsweise wenigstens 90 % der Wandstärke der Betonwand erstrecken. Insbesondere ist es möglich, dass das Ringteil aus Metall die Wandstärke insgesamt bedeckt. Die Wandstärke der Betonwand kann beispielsweise zwischen 10 cm und 50 cm, vorzugsweise zwischen 20 cm und 40 cm liegen.

Die Materialstärke des Ringteils aus Metall kann beispielsweise zwischen 5 mm und 50 mm, vorzugsweise zwischen 10 mm und 40 mm liegen. Das Ringteil aus Metall kann aus gewöhnlichem Stahl bestehen. Ein hochwertigeres Material kann verwendet werden, ist aber in der Regel nicht erforderlich, da in erster Linie Druckkräfte auf das Ringteil ausgeübt werden.

Das erste Ringteil aus Metall und das zweite Ringteil aus Metall können in zueinander parallelen Ebenen angeordnet sein. Die Toleranz des Turmsegments kann so sein, dass die größte Abweichung vom Sollmaß zwischen dem ersten Ringteil und dem zweiten Ringteil nicht größer ist als 2 mm, vorzugsweise nicht größer ist als 1 mm, weiter vorzugsweise nicht größer ist als 0,5 mm. Der Abstand zwischen dem ersten Ringteil und dem zweiten Ringteil, der die Höhe des Turmsegments definiert, kann beispielsweise zwischen 2,5 m und 20 m liegen.

Das Ringteil aus Metall kann eines oder mehrere Verankerungselemente umfassen. Die Verankerungselemente können beispielsweise durch Schweißen mit dem Metallmaterial verbunden sein. Die Verankerungselemente können sich in einer zu der Abschlussfläche entgegengesetzten Richtung erstrecken. Das Verankerungselement kann von dem Betonmaterial umschlossen sein, sodass das Ringteil fest mit dem Betonmaterial verbunden ist. Ein Verankerungselement kann eine Hinterschneidung aufweisen, sodass das Verankerungselement nicht aus dem Betonmaterial herausgezogen werden kann, ohne dass die Öffnung vergrößert wird, mit der das Betonmaterial das Verankerungselement umschließt. Beispielsweise kann das Verankerungselement einen Schaft umfassen, der sich in einem Abstand von dem Ringteil pilzförmig aufweitet.

Zusätzlich oder alternativ zu den Verankerungselementen kann das Ringteil aus Metall einen oder mehrere Bewehrungsstäbe umfassen. Die Bewehrungsstäbe können beispielsweise durch Schweißen mit dem Metallmaterial verbunden sein. Die Bewehrungsstäbe können so ausgerichtet sein, dass sie sich entlang der Höhendimension der Betonwand in Richtung des gegenüberliegenden Ringteils erstrecken. Die Bewehrungsstäbe können sich über wenigstens 10 %, vorzugsweise wenigsten 20 %, weiter vorzugsweise wenigstens 40 % der Höhe des Turmsegments erstrecken.

Das Turmsegment kann mit einer Teilkomponente einer Verdrehsicherung ausgestattet sein. Wenn zwei Turmsegmente übereinander angeordnet sind, kann die Teilkomponente der Verdrehsicherung mit dem benachbarten Turmsegment in Eingriff sein, um zu verhindern, dass die beiden Turmsegmente sich um die Hochachse relativ zueinander verdrehen können. Die Teilkomponente der Verdrehsicherung kann beispielsweise eine Bohrung umfassen, die mit einer Bohrung in dem benachbarten Turmsegment fluchtet. Wenn ein Bolzen durch die beiden Bohrungen hindurch geführt ist, ist ein Verdrehen der beiden Turmsegmente relativ zueinander ausgeschlossen. Die Verdrehsicherung kann einen Vorsprung umfassen, der sich von dem Ringteil radial nach innen erstreckt, sodass der Eingriff außerhalb der Betonwand stattfinden kann.

Die Erfindung betrifft außerdem einen Turm, der eine Mehrzahl solcher Turmsegmente umfasst, die übereinander angeordnet sind. Dabei kann jeweils ein unteres Ringteil aus Metall auf einem oberen Ringteil aus Metall des darunter angeordneten Turmsegments aufliegen. Der Turm kann ein oberstes Turmsegment aus Beton umfassen, der ein unteres Ringteil aufweist. Der obere Abschluss des obersten Turmsegments aus Beton kann einen Übergang zu einem Turmabschnitt bilden, der insgesamt aus Metall besteht. Das unterste Turmsegment kann mit einer Gründungsstruktur verbunden sein. Der Turmabschnitt zwischen dem untersten Turmsegment und dem obersten Turmsegment aus Beton kann beispielsweise eine Höhe zwischen 30 m und 100 m, vorzugsweise zwischen 50 m und 80 m haben.

Um die Turmsegmente in Position relativ zueinander zu halten, kann der Turm eine Spanneinrichtung umfassen, mit der die Turmsegmente gegeneinander gespannt werden. Die Spanneinrichtung kann sich von dem obersten Turmsegment aus Beton bis zu einer Gründungsstruktur des Turms erstrecken.

Die Erfindung betrifft außerdem ein Verfahren zum Herstellen eines solchen Turmsegments. Bei dem Verfahren werden ein erstes Ringteil aus Metall und ein zweites Ringteil aus Metall in eine vorgegebene Position relativ zueinander gebracht. Ein Zwischenraum zwischen dem ersten Ringteil aus Metall und dem zweiten Ringteil aus Metall wird mit einem Betonmaterial aufgefüllt, sodass das Betonmaterial das erste Ringteil aus Metall und das zweite Ringteil aus Metall miteinander verbindet.

Das Verfahren kann so durchgeführt werden, dass die beiden Ringteile in der vorgegebenen Position senkrecht ausgerichtet sind. Die beiden Ringteile können sich in zueinander parallelen Ebenen erstrecken. Es können Stützwände verwendet werden, um die Ringteile in dieser Position zu halten. Ein Ringteil kann beispielsweise durch Schrauben mit einer Stützwand verbunden sein. Die Schraubverbindung kann so gestaltet sein, dass sie nicht mit dem Betonmaterial in Berührung kommt, sodass die Schraubverbindung auch nach dem Aushärten des Betonmaterials noch gut gelöst werden kann. Beispielsweise kann die Schraubverbindung in einem Sackloch münden, das in der Abschlussfläche des Ringteils ausgebildet ist. Die Vorgehensweise mit zwei senkrecht angeordneten Ringteilen bietet sich insbesondere an, wenn das Turmsegment sich nur über einen Teilring erstreckt, weil ein Einfüllen des Betons dann leicht möglich ist.

Aus solchen Turmsegmenten kann ein Turm einer Windenergieanlage zusammengesetzt werden, indem eine Mehrzahl von Turmsegmenten übereinander gestapelt wird. Vor dem Stapeln können Teilring-Turmsegmente zu Vollring-Turmsegmenten zusammengesetzt werden. Um die Reibungskraft zwischen den übereinander angeordneten Turmsegmenten zu erhöhen, können die übereinander angeordneten Turmsegmente gegeneinander gespannt werden. Die Spanneinrichtung kann sich von einem obersten Turmsegment aus Beton bis zu einer Gründungsstruktur des Turms erstrecken.

Damit der Turm Torsionskräften gut standhalten kann, können benachbarte Turmsegmente gegen Verdrehen um die Hochachse gesichert werden. Ist das Turmsegment mit einer vorgefertigten Teilkomponente einer Verdrehsicherung ausgestattet, so kann diese Teilkomponente mit dem benachbarten Turmsegment in Eingriff gebracht werden.

Insbesondere bei Turmsegmenten ohne vorgefertigte Verdrehsicherung kann ein Ringteil zum Zwecke der Verdrehsicherung mechanisch bearbeitet werden. Beispielsweise kann eine Bohrung erzeugt werden, die in Radialrichtung ausgerichtet ist und sich über zwei übereinanderliegende Ringteile erstreckt. Wird in eine solche Bohrung ein Bolzen eingebracht, können die angrenzenden Turmsegmente nicht gegeneinander verdreht werden, ohne dass die Ringteile voneinander abgehoben werden. Diese Vorgehensweise hat den Vorteil, dass keine Toleranzen berücksichtigt werden müssen, weil die beiden Turmsegmente bereits in ihrer endgültigen Position relativ zueinander sind.

Das Verfahren kann mit weiteren Merkmalen fortgebildet werden, die im Zusammenhang des erfindungsgemäßen Turmsegments beschrieben sind. Das Turmsegment kann mit weiteren Merkmalen fortgebildet werden, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine erfindungsgemäße Windenergieanlage;
- Fig. 2:: einen erfindungsgemäßen Turm eine Windenergieanlage;
- Fig. 3:: ein erfindungsgemäßes Turmsegment;
- Fig. 4:: ein Detail des Turmsegments aus Fig. 3 in vergrößerter Darstellung;
- Fig. 5:: die Darstellung gemäß Fig. 3 bei einer alternativen Ausführungsform der Erfindung;
- Fig. 6:: ein Detail eines erfindungsgemäßen Turms;
- Fig. 7:: das Detail aus Fig. 6 in einer anderen Perspektive;
- Fig. 8:: ein Detail eines erfindungsgemäßen Turmsegments.

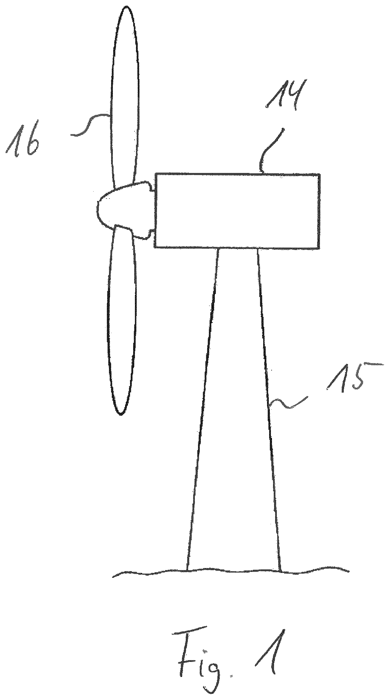

Bei einer Windenergieanlage in Fig. 1 ist eine Gondel 14 drehbar auf einem Turm 15 angeordnet. Die Gondel 14 trägt einen Rotor 16, der durch den Wind in Drehung versetzt wird und über eine Rotorwelle einen Generator antreibt, um elektrische Energie zu erzeugen. Die Gondel 14 kann relativ zu dem Turm 15 gedreht werden, um den Rotor 16 in Windrichtung auszurichten.

Je nach Betriebszustand der Windenergieanlage können auf den Turm 15 hohe statische und dynamische Lasten wirken. Ziel ist es, mit geringem Aufwand einen Turm herzustellen, der diesen Belastungen standhält.

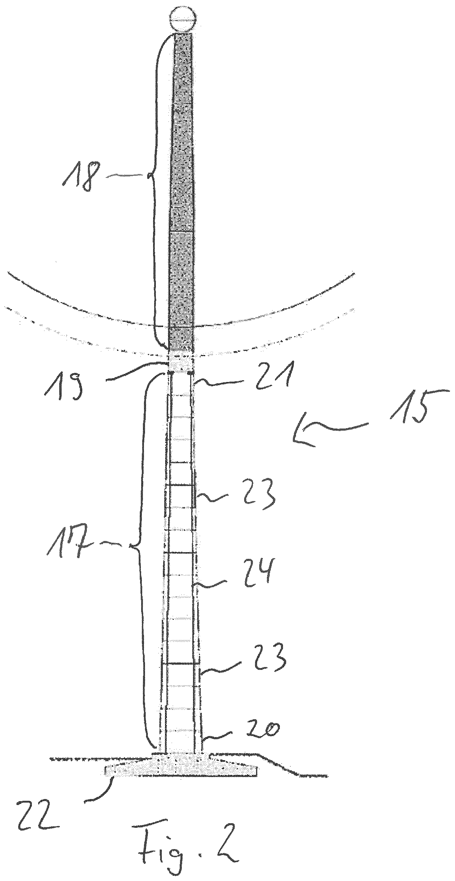

Gemäß Fig. 2 umfasst der Turm 15 einen unteren Abschnitt 17, in dem die Turmwand aus Beton besteht, und einen oberen Abschnitt 18, in dem die Turmwand aus Stahl besteht. Zwischen dem unteren Abschnitt 17 und dem oberen Abschnitt 18 ist ein Übergangsstück 19 angeordnet. Das Übergangsstück 19 ist etwa auf der Höhe angeordnet, die von den Rotorblattspitzen überstrichen wird, wenn die Rotorblattspitzen den Turm kreuzen. Die Achse des Rotors 16 und die von den Blattspitzen überstrichene Bahn sind in Fig. 2 angedeutet.

Der untere Abschnitt 17 des Turms erstreckt sich von einem Gründungssegment 20 bis zu einem oberen Anschlusssegment 21. Das Gründungsegment 20 ist mit einer Gründungsstruktur 22 der Windenergieanlage verbunden, die im Erdboden angeordnet ist. Das obere Anschlusssegment 21 bildet den Anschluss für das Übergangsstück 19. Alle zwischen dem Gründungsegment 20 und dem oberen Anschlusssegment 21 angeordneten Zwischensegmente 23 sind gemäß der Erfindung ausgebildet. Eine Spanneinrichtung 24 erstreckt sich von einem nach innen vorspringenden Flansch des oberen Anschlusssegments 21 bis zu der Gründungsstruktur 22. Mit der Spanneinrichtung 24 werden die Zwischensegmente 23 in vertikaler Richtung gegeneinander gespannt und dadurch in der richtigen Position zueinander gehalten.

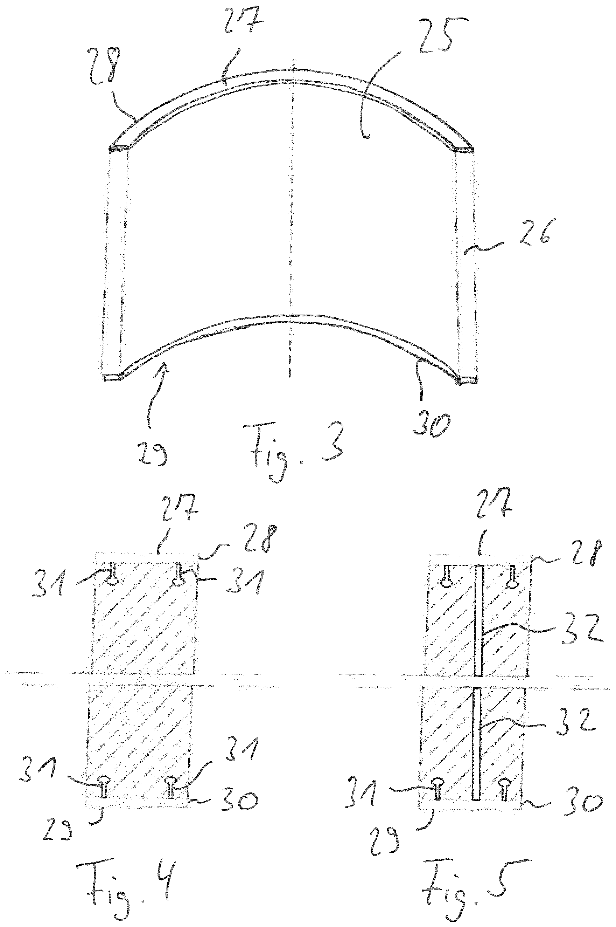

Die Zwischensegmente 23 sind jeweils aus zwei Halbschalen wie in Fig. 3 gezeigt zusammengesetzt. Jede Halbschale bildet ein erfindungsgemäßes Turmsegment 25. Die Wand 26 des Turmsegments 25 besteht aus Beton. Die obere Abschlussfläche 27 des Turmsegments 25 wird durch ein erstes Ringteil 28 aus Metall gebildet. Die untere Abschlussfläche 29 des Turmsegments 25 wird durch ein zweites Ringteil 30 aus Metall gebildet.

Das erste Ringteil 28 und das zweite Ringteil 30 umfassen gemäß Fig. 4 jeweils pilzförmige Verankerungselemente 31, die sich in einer zu den Abschlussflächen 27, 29 entgegengesetzten Richtung erstrecken. Die Verankerungselemente 31 sind in das Betonmaterial eingegossen, sodass die Ringteile 28, 30 stabil mit der Betonwand 26 verbunden sind. Um die Kraftüberleitung zwischen den Ringteilen 28, 30 und dem Betonmaterial zu verbessern, sind in der Ausführungsform gemäß Fig. 5 zusätzlich Bewehrungsstäbe 32 mit den Ringteilen 28, 30 verbunden.

Die in Fig. 3 gezeigte Halbschale bildet ein Teilring-Segment. Zwei Halbschalen können zu einem Vollring-Segment zusammengesetzt werden, das ein Zwischensegment 23 des Turms 15 bilden kann. Werden die Turmsegmente 25 übereinander gestapelt, so berühren die aneinandergrenzenden Turmsegmente 25 sich ausschließlich über die Abschlussflächen 27, 29 der Ringteile 28, 30. Dadurch ergibt sich eine gute Kraftüberleitung zwischen den Turmsegmenten 25 und das Risiko von Beschädigungen an dem Betonmaterial ist vermindert.

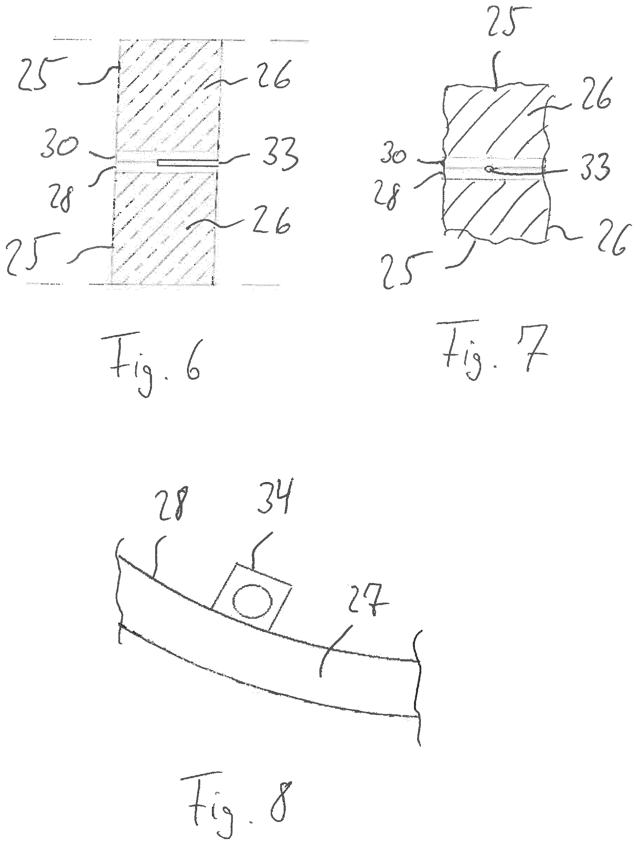

Durch die Spanneinrichtung 24 werden die übereinander angeordneten Turmsegmente 25 so gegeneinander gespannt, dass die Reibung zwischen den aufeinanderliegenden Abschlussflächen 28, 30 ausreicht, um zu verhindern, dass die Turmsegmente 25 relativ zueinander verrutschen können. Für eine verbesserte Stabilität gegenüber Torsionskräften können die Turmsegmente 25 zusätzlich gegen Verdrehen gesichert sein. Gemäß Fig. 6 und 7 kann dazu eine Bohrung 33 in die Ringteile 28, 30 eingebracht werden, nachdem die Turmsegmente 25 in der richtigen Position übereinander angeordnet wurden. Wird in eine solche Bohrung ein Bolzen eingesteckt, können die Turmsegmente 25 nicht relativ zueinander verdreht werden, ohne dass das untere Ringteil 30 des oberen Turmsegments 25 von dem oberen Ringteil 28 des unteren Turmsegments 25 abgehoben wird.

Möglich ist auch, das Turmsegment mit einer vorgefertigten Teilkomponente einer Verdrehsicherung auszustatten. In Fig. 8 ist dies eine von dem Ringteil 28 radial nach innen vorspringende Lasche 34, in der eine Bohrung ausgebildet ist. Wenn die Bohrung mit einer entsprechenden Bohrung in dem benachbarten Turmsegment 25 fluchtet, kann ein Bolzen durch die Bohrungen hindurch geführt werden, durch den ein Verdrehen verhindert wird. Um einen Toleranzausgleich zu ermöglichen, kann der Bolzen einen kleineren Durchmesser haben als die Bohrungen.

## Patentansprüche

1. Turmsegment für einen Turm (15) einer Windenergieanlage mit einer Wand (26) aus Beton, wobei ein mit dem Beton verbundenes erstes Ringteil (28) aus Metall eine obere Abschlussfläche (27) der Wand (26) bildet und wobei ein zweites Ringteil (30) aus Metall eine untere Abschlussfläche (29) der Wand (26) bildet, wobei das Turmsegment ein Teilring-Segment (25) ist, **dadurch gekennzeichnet, dass** das erste Ringteil (28) und/oder das zweite Ringteil (30) sich über den gesamten Umfangsabschnitt erstrecken, den das Turmsegment aufspannt.

2. Turmsegment nach Anspruch 1, **dadurch gekennzeichnet, dass** das Turmsegment sich insbesondere über einen Umfangsabschnitt von 90°, 120° oder 180° erstreckt.

3. Turmsegment nach einem der Ansprüche 1 oder 2, **dadurch gekennzeichnet, dass** das erste Ringteil (28) und/oder das zweite Ringteil (30) eine Abschlussfläche (27, 29) von ebener Form bilden.

4. Turmsegment nach einem der Ansprüche 1 bis 3, **dadurch gekennzeichnet, dass** das erste Ringteil (28), das zweite Ringteil (30) und/oder das Turmsegment (25) frei sind von Elementen, die über die Abschlussfläche (27, 29) hinausragen.

5. Turmsegment nach einem der Ansprüche 1 bis 4, **dadurch gekennzeichnet, dass** bezogen auf eine radiale Richtung das erste Ringteil (28) und/oder das zweite Ringteil (30) sich über wenigstens 50 %, vorzugsweise wenigstens 70 %, weiter vorzugsweise wenigstens 90 % der Wandstärke der Betonwand (26) erstrecken.

6. Turmsegment nach einem der Ansprüche 1 bis 5, **dadurch gekennzeichnet, dass** das erste Ringteil (28) und das zweite Ringteil (30) in zueinander parallelen Ebenen angeordnet sind.

7. Turmsegment nach einem der Ansprüche 1 bis 6, **dadurch gekennzeichnet, dass** die größte Abweichung vom Sollmaß zwischen dem ersten Ringteil (28) und dem zweiten Ringteil (30) nicht größer ist als 2 mm, vorzugsweise nicht größer ist als 1 mm, weiter vorzugsweise nicht größer ist als 0,5 mm.

8. Turmsegment nach einem der Ansprüche 1 bis 7, **dadurch gekennzeichnet, dass** das erste Ringteil (28) und/oder das zweite Ringteil (30) eines oder mehrere Verankerungselemente (31) umfassen, die von dem Betonmaterial umschlossen sind.

9. Turmsegment nach einem der Ansprüche 1 bis 8, **dadurch gekennzeichnet, dass** das erste Ringteil (28) und/oder das zweite Ringteil (30) einen oder mehrere Bewehrungsstäbe (32) umfassen, die sich entlang einer Höhendimension der Betonwand (26) erstrecken.

10. Turmsegment nach einem der Ansprüche 1 bis 9, **gekennzeichnet durch** eine Teilkomponente (34) einer Verdrehsicherung.

11. Turm mit einer Mehrzahl von übereinander angeordneten Turmsegmenten (25) gemäß einem der Ansprüchen 1 bis 10, **dadurch gekennzeichnet**, das der Turm eine Spanneinrichtung (24) umfasst, um die Turmsegmente (25) gegeneinander zu spannen.

12. Verfahren zum Herstellen eines Turmsegments, wobei das Turmsegment ein Teilring-Segment (25) ist, bei dem ein erstes Ringteil (28) aus Metall und ein zweites Ringteil (30) aus Metall in eine vorgegebene Position relativ zueinander gebracht werden und bei dem ein Zwischenraum zwischen dem ersten Ringteil (28) und dem zweiten Ringteil (30) mit einem Betonmaterial aufgefüllt wird, sodass das Betonmaterial das erste Ringteil (28) und das zweite Ringteil (30) miteinander verbindet, **dadurch gekennzeichnet, dass** das erste erste Ringteil (28) und/oder das zweite Ringteil (30) sich über den gesamten Umfangsabschnitt erstrecken, den das Turmsegment aufspannt.

13. Verfahren nach Anspruch 12, **dadurch gekennzeichnet, dass** das erste Ringteil (28) und zweite Ringteil (30) in der vorgegebenen Position senkrecht ausgerichtet sind.

## Claims

1. Tower segment for a tower (15) of a wind turbine, having a wall (26) made of concrete, wherein a first ring part (28) made of metal and connected to the concrete forms an upper terminating surface (27) of the wall (26), and wherein a second ring part (30) made of metal forms a lower terminating surface (29) of the wall (26), wherein the tower segment is a partial ring segment (25), **characterized in that** the first ring part (28) and/or the second ring part (30) extend(s) over the entire circumferential portion defined by the tower segment.

2. Tower segment according to Claim 1, **characterized in that** the tower segment extends in particular over a circumferential portion of 90°, 120° or 180°.

3. Tower segment according to either of Claims 1 and 2, **characterized in that** the first ring part (28) and/or the second ring part (30) form(s) a terminating surface (27, 29) of planar form.

4. Tower segment according to one of Claims 1 to 3, **characterized in that** the first ring part (28), the second ring part (30) and/or the tower segment (25) are/is free of elements that project beyond a terminating surface (27, 29).

5. Tower segment according to one of Claims 1 to 4, **characterized in that**, with respect to a radial direction, the first ring part (28) and/or the second ring part (30) extend(s) over at least 50%, preferably at least 70%, more preferably at least 90%, of the wall thickness of the concrete wall (26) .

6. Tower segment according to one of Claims 1 to 5, **characterized in that** the first ring part (28) and the second ring part (30) are arranged in mutually parallel planes.

7. Tower segment according to one of Claims 1 to 6, **characterized in that** the largest deviation from the target dimension between the first ring part (28) and the second ring part (30) is not larger than 2 mm, preferably is not larger than 1 mm, more preferably is not larger than 0.5 mm.

8. Tower segment according to one of Claims 1 to 7, **characterized in that** the first ring part (28) and/or the second ring part (30) comprise(s) one or more anchoring elements (31) which are enclosed by the concrete material.

9. Tower segment according to one of Claims 1 to 8, **characterized in that** the first ring part (28) and/or the second ring part (30) comprise(s) one or more reinforcement bars (32) which extend along a height dimension of the concrete wall (26).

10. Tower segment according to one of Claims 1 to 9, **characterized by** a sub-component (34) of a rotation prevention means.

11. Tower having a plurality of tower segments (25) according to one of Claims 1 to 10 arranged one above the other, **characterized in that** the tower comprises a tensioning device (24) for tensioning the tower segments (25) with respect to one another.

12. Method for producing a tower segment, wherein the tower segment is a partial ring segment (25), in which a first ring part (28) made of metal and a second ring part (30) made of metal are brought into a predefined position relative to one another, and in which an intermediate space between the first ring part (28) and the second ring part (30) is filled with a concrete material so that the concrete material connects the first ring part (28) and the second ring part (30) to one another, **characterized in that** the first ring part (28) and/or the second ring part (30) extend(s) over the entire circumferential portion defined by the tower segment.

13. Method according to Claim 12, **characterized in that** the first ring part (28) and the second ring part (30) are oriented vertically in the predefined position.

## Revendications

1. Segment de tour pour une tour (15) d'une installation d'énergie éolienne avec une paroi (26) en béton, une première partie annulaire (28) en métal reliée au béton formant une surface de fermeture supérieure (27) de la paroi (26) et une deuxième partie annulaire (30) en métal formant une surface de fermeture inférieure (29) de la paroi (26), le segment de tour étant un segment annulaire partiel (25), **caractérisé en ce que** la première partie annulaire (28) et/ou la deuxième partie annulaire (30) s'étendent sur toute la section circonférentielle que le segment de tour définit.

2. Segment de tour selon la revendication 1, **caractérisé en ce que** le segment de tour s'étend notamment sur une section circonférentielle de 90°, 120° ou 180°.

3. Segment de tour selon l'une quelconque des revendications 1 ou 2, **caractérisé en ce que** la première partie annulaire (28) et/ou la deuxième partie annulaire (30) forment une surface de fermeture (27, 29) de forme plane.

4. Segment de tour selon l'une quelconque des revendications 1 à 3, **caractérisé en ce que** la première partie annulaire (28), la deuxième partie annulaire (30) et/ou le segment de tour (25) sont exempts d'éléments qui dépassent de la surface de fermeture (27, 29).

5. Segment de tour selon l'une quelconque des revendications 1 à 4, **caractérisé en ce que**, par rapport à une direction radiale, la première partie annulaire (28) et/ou la deuxième partie annulaire (30) s'étendent sur au moins 50 %, de préférence au moins 70 %, de manière davantage préférée au moins 90 % de l'épaisseur de paroi de la paroi en béton (26).

6. Segment de tour selon l'une quelconque des revendications 1 à 5, **caractérisé en ce que** la première partie annulaire (28) et la deuxième partie annulaire (30) sont agencées dans des plans parallèles entre eux.

7. Segment de tour selon l'une quelconque des revendications 1 à 6, **caractérisé en ce que** l'écart maximal de dimension nominale entre la première partie annulaire (28) et la deuxième partie annulaire (30) n'est pas supérieur à 2 mm, de préférence n'est pas supérieur à 1 mm, de manière davantage préférée n'est pas supérieur à 0,5 mm.

8. Segment de tour selon l'une quelconque des revendications 1 à 7, **caractérisé en ce que** la première partie annulaire (28) et/ou la deuxième partie annulaire (30) comprennent un ou plusieurs éléments d'ancrage (31) qui sont entourés par le matériau de béton.

9. Segment de tour selon l'une quelconque des revendications 1 à 8, **caractérisé en ce que** la première partie annulaire (28) et/ou la deuxième partie annulaire (30) comprennent une ou plusieurs barres d'armature (32) qui s'étendent le long d'une dimension de hauteur de la paroi en béton (26).

10. Segment de tour selon l'une quelconque des revendications 1 à 9, **caractérisé par** un composant partiel (34) d'un dispositif anti-torsion.

11. Tour comprenant une pluralité de segments de tour (25) selon l'une quelconque des revendications 1 à 10 agencés les uns au-dessus des autres, **caractérisée en ce que** la tour comprend un dispositif de serrage (24) pour serrer les segments de tour (25) les uns contre les autres.

12. Procédé de fabrication d'un segment de tour, le segment de tour étant un segment annulaire partiel (25), dans lequel une première partie annulaire (28) en métal et une deuxième partie annulaire (30) en métal sont amenées dans une position prédéterminée l'une par rapport à l'autre et dans lequel un espace intermédiaire entre la première partie annulaire (28) et la deuxième partie annulaire (30) est rempli d'un matériau de béton, de telle sorte que le matériau de béton relie la première partie annulaire (28) et la deuxième partie annulaire (30) entre elles, **caractérisé en ce que** la première partie annulaire (28) et/ou la deuxième partie annulaire (30) s'étendent sur toute la section circonférentielle que le segment de tour définit.

13. Procédé selon la revendication 12, **caractérisé en ce que** la première partie annulaire (28) et la deuxième partie annulaire (30) sont orientées verticalement dans la position prédéterminée.
